# EUROPÄISCHE PATENTSCHRIFT

(11) **EP 1 517 806 B1**
(45) Veröffentlichungstag und Bekanntmachung des Hinweises auf die Patenterteilung: **02.11.2006**
(21) Anmeldenummer: 03738398.1
(22) Anmeldetag: 24.06.2003
(51) Int. Cl.: B60H 1/00

(54) **ZYLINDERKLAPPE MIT STRUKTURIERTER RAUHER OBERFLÄCHE**
CYLINDRICAL FLAP WITH STRUCTURED ROUGH SURFACES
VOLET DE CYLINDRE A SURFACE RUGUEUSE STRUCTUREE

(30) Priorität: 28.06.2002 DE 10229175
(43) Veröffentlichungstag der Anmeldung: 30.03.2005
(73) Patentinhaber: Valeo Klimasysteme GmbH, 96476 Rodach (DE)
(72) Erfinder: FIENE, Andreas, 38179 Grosse Schwülper (DE)
(74) Vertreter: Lemaire, Marc
(86) Internationale Anmeldenummer: PCT/IB2003/002830
(87) Internationale Veröffentlichungsnummer: WO 2004/002763

(56) Entgegenhaltungen:
- DE-A- 10 018 268
- DE-A- 10 131 121
- DE-A- 10 134 629
- US-A- 5 836 813
- US-B1- 6 386 966
- PATENT ABSTRACTS OF JAPAN vol. 014, no. 110 (M-0943), 28. Februar 1990 (1990-02-28) -& JP 01 311911 A (DIESEL KIKI CO LTD), 15. Dezember 1989 (1989-12-15)

## Beschreibung

Die vorliegende Erfindung betrifft allgemein ein Luftstromsteuermittel, insbesondere für eine Kraftfahrzeugsheiz-, -belüftungs- und/oder -klimaanlage. Solch ein Luftstomsteuermittel umfasst üblicherweise eine in einem Luftdurchtritt angeordnete Luftklappe, die dazu dient den lichten Querschnitt des Luftdurchtrittes mehr oder weniger freizugeben bzw. zu sperren.

Ein gattungsgemäßes Luftstromsteuermittel ist in der JP 01 311 911 offenbart.

Nachdem in den letzten Jahren im Umfeld von Kraftfahrzeugsheiz-, -belüftungs- und/oder - klimaanlagen vermehrt Anstrengungen unternommen wurden, jegliche Geräuschentwicklung zu vermeiden, wurde vorgeschlagen, verschiedene Schallabsorptionsmittel vorzusehen, wie z. B. in dem Gehäuse ausgebildete Helmholz-Resonatoren und dergleichen. Ferner wurde versucht eine Geräuschentwicklung an Luftklappen dadurch zu vermeiden, dass man den Randbereich speziell konzipiert, um z. B. eine unregelmäßige Struktur bereitzustellen, die zum unmittelbaren Öffnungszeitpunkt Pfeifgeräusche vermeiden kann, da der sich anfänglich ausbildende Spalt von unregelmäßiger Konfiguration ist.

Aus der DE-A-10018268 kennt man ein Luftstromsteuermittel gemäß dem Oberbegriff des Anspruchs 1, insbesondere für eine Kraftfahrzeugsheiz-, -belüftungs- und/oder -klimaanlage mit einer in einem Luftdurchtritt angeordneten Luftklappe, mit jeweiligen ersten Flächenabschnitten zum wechselseitigen Eingriff und jeweiligen zweiten Flächenabschnitten, die nicht miteinander in Eingriff treten. Gemäß der DE-A-10018268 wird vorgeschlagen, den Randbereich der Luftklappe, also einen ersten Flächenabschnitt davon, unregelmäßig auszubilden, um Pfeifgeräusche zu vermeiden. Bei einer bevorzugten Ausführungsform stellt der erste Flächenabschnitt einen Winkel dar, der aus dem Klappenelement selbst und einer vorkragenden Rippe gebildet wird, wobei die Unregelmäßigkeiten am Ende der Rippe ausgebildet ist, da dies der Bildungsort eines Luftspaltes ist, zu dem Zeitpunkt, wo der wechselseitige Eingriff aufgelöst wird.

Ferner wurden auch von der Anmelderin verschiedene Luftklappen mit unregelmäßigen Raridstrukturen vorgeschlagen, um einer Geräuschbildung zum Öffnungszeitpunkt entgegenzuwirken.

Obwohl die oben angegebenen Bestrebungen in Einzelfällen zu einer annehmbaren Geräuschreduzierung geführt haben, bestehen nichtsdestotrotz eine Vielzahl von Anwendungen, wo die vorgeschlagenen Maßnahmen nicht ausreichend sind, um zu einer gewünschten Geräuschreduzierung zu führen.

Es ist daher Aufgabe der vorliegenden Erfindung, ein Luftstromsteuermittel der eingangs genannten Art bereitzustellen, welches die Ausbildung von Strömungsgeräuschen noch stärker vermeiden kann.

Erfindungsgemäß wird diese Aufgabe gelöst, durch das Luftstromsteuermittel des Anspruchs 1. In äußerst überraschender Weise hat sich nämlich herausgestellt, dass eine sehr effektive Geräuschreduzierung erzielt werden kann, wenn man die sogenannten Nicht-Randbereiche der Klappe oder einen nicht in der Dichtung involvierten Bereich des Luftdurchtrittes strukturiert, in dem man dort Oberflächenstrukturelemente ausbildet. Wesentlich ist jedoch für die erfindungsgemäße Lehre, dass eben gerade nicht die Bereiche strukturiert werden, die die Dichtfunktion erfüllen, sondern diesbezüglich benachbarte Flächenabschnitte. Dies hat den erheblichen Vorteil, dass im Rahmen der Auslegung keinerlei Einschränkungen bezüglich der Dichtheit und der anzuwendenden Schließdrücke bestehen, wie dies der Fall ist, wenn man den Dichtbereich selbst unregelmäßig ausbilden möchte, um zum Öffnungszeitpunkt zu einer unregelmäßigen Spaltkonfiguration zu gelangen.

Die Oberflächenstrukturelemente können Vor- und/oder Rücksprünge umfassen, insbesondere bei einer Höhe/Tiefe von 2 mm. Die so bereitgestellte Strukturierung der Oberfläche ermöglicht in zufriedenstellender Weise die Strömung im Oberflächenbereich derart zu verändern, dass Luftströmungsgeräusche sowohl an diesem Ort, als auch an den Rändern oder ersten Flächenabschnitten vermieden werden, ohne dass Unregelmäßigkeiten im Dichtungsbereich erforderlich wären.

Vorteilhafterweise sind die Oberflächenstrukturelemente zumindest flächenabschnittsweise unregelmäßig angeordnet um die Ausbildung von parasitären Geräuschentwicklungsphänomenen zu vermeiden.

Gemäß einer bevorzugten Ausführungsform umfassen die Oberflächenstrukturelemente im wesentlichen quaderförmige Elemente. Die Verwendung von quaderförmigen Oberflächenstrukturelementen gewährleistet eine gute Entformbarkeit für den Fall, dass der Luftdurchtritt und/oder die Luftklappe mittels eines Spritzgussverfahrens hergestellt ist, sowie eine einfache Konzeption der Gesamtoberfläche unter Vermeidung von regelmäßigen Strukturen.

Die Oberflächenstrukturelemente können zumindest teilweise auch über eine polyederartige Konfiguration verfügen, wie z. B. tetraederförmig, pyramidenartig oder dergleichen, wobei auch kegel- oder kegelstumpfartige Konfigurationen denkbar sind. In jedem Fall ist anzumerken, dass sowohl Polyeder mit diskreten Spitzen als auch solche mit abgerundeten Spitzen vorteilhaft sein können, um z. B. an unterschiedlichen Orten unterschiedliche Strömungswiderstände bereitzustellen.

Die Oberflächenstrukturelemente können zumindest teilweise auch im wesentlichen halbsphärisch kontstruiert sein. In diesem Fall könnten die Oberflächenstrukturelemente eine Noppenstruktur bereitstellen, oder auch Dellen, ähnlich wie sie z. B. bei einem Golfball zum Einsatz kommen.

Vorteilhafterweise beträgt die projizierte Fläche eines Oberflächenstrukturelementes zwischen 0,1 und 1 cm², insbesondere etwa 0,5 cm². Eine derart gewählte Größe der Oberflächenstrukturelemente gewährleistet eine zufriedenstellende Strömungsveränderung der Grenzluftschicht in unmittelbarer Nachbarschaft zu den Oberflächenstrukturelementen, um effektiv die Bildung von Geräuschen zu vermeiden, wobei auch sehr hohe Strömungsgeschwindigkeiten nicht in einer parasitären Geräuschbildung resultieren.

Gemäß einer bevorzugten Ausführungsform ist die Luftklappe als Schalenklappe ausgebildet, wobei insbesondere die Oberflächenstrukturelemente an der Schalenfläche oder einem der Schalenfläche gegenüberstehendem Teil des Luftdurchtrittes bzw. an beiden dieser Flächen ausgebildet sind.

Eine besonders vorteilhafte Anwendung des erfindungsgemäßen Luftstromsteuermittels ist in einer Frischluft/Umluft-Steuerung zu sehen, da gerade bei dieser Anwendung hohe Staudrükke und höhe Strömungsgeschwindigkeiten gehandhabt werden müssen, die bei den bisherigen Lösungen häufig zu Problemen bezüglich der Geräuschbildung geführt haben und auch den bisherigen Lösungsansatz, den Rand der Luftklappe umzugestalten nicht zugelassen haben.

Weitere Vorteile und Merkmale der vorliegenden Erfindung ergeben sich ferner aus der folgenden, lediglich beispielhaft gegebenen Beschreibung einer derzeit bevorzugten Ausführungsform, in welcher auf die beiliegenden Zeichnungen Bezug genommen wird, in welchen gilt:

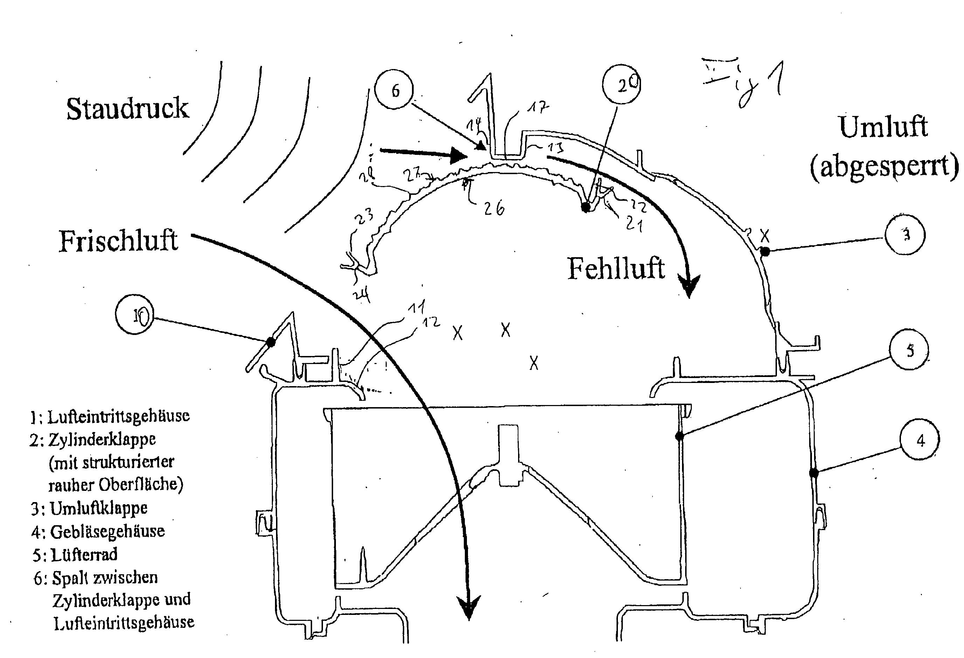

Fig. 1 zeigt in schematischer Schnittansicht ein Lufteintrittsgehäuse für eine Kraftfahrzeugsheiz-, -belüftungs- und/oder -klimaanlage mit Frischluft/Umluft-Steuerung als bevorzugte Anwendung des erfindungsgemäßen Luftstromsteuermittels.

Das Luftstromsteuermittel selbst ist gebildet aus einer Zylinder- oder Schalenklappe 20 und einem Luftdurchtritt, der von dem Lufteintrittsgehäuse 10 begrenzt wird und in der dargestellten Ausführungsform die Frischluftzufuhrdurchtrittsöffnung darstellt. Die gezeigte Anordnung dient dazu, mittels des Gebläses, von dem lediglich das Lüfterrad 5 dargestellt ist, in den Fahrzeuginnenraum zu befördern, wobei saugseitig wahlweise Frischluft oder Umluft angesaugt werden kann. Zum Absperren der Frischluftzufuhr ist in an und für sich üblicher Weise die Zylinder- oder Schalenklappe 20 vorgesehen, die über erste Flächenabschnitte 21, 22, 23, 24 verfügt, mittels welchen ein dichtender Eingriff jeweils bereitgestellt werden kann mit ersten Flächenabschnitten 11, 12, 13, 14 des Luftdurchtrittes. Der Luftdurchtritt umfasst ferner in der gezeigten Ausführungsform einen zweiten Flächenabschnitt 17, dem keine Dichtfunktion zukommt. In entsprechender Weise verfügt auch die Luftklappe 20 über zweite Flächenabschnitte 26, 27, die ebenfalls nicht an einer Wechselwirkung mit dem Durchtritt beteiligt sind, sondern lediglich die Dichteingriffsabschnitte flächenmäßig verbinden. Wie dargestellt ist der Flächenabschnitt 27 mit Oberflächenstrukturelementen 28 versehen, so dass der Flächenabschnitt 27 insgesamt strukturiert ausgebildet ist.

In der in Fig. 1 dargestellten Position der Luftklappe 20, die eine Teil-Frischluftposition darstellt, wird ein erheblicher Staudruck, insbesondere bei hohen Fahrzeuggeschwindigkeiten, in dem Flächenbereich zwischen dem Lufteintrittsgehäuse 10 und der Luftklappe 20 wird somit die Ausbildung von regelmäßigen Strömungsstrukturen vermieden, wodurch Pfeifgeräusche praktisch eliminiert werden können. Diese Situation besteht - wie dargestellt - bei jeder beliebigen Position der Luftklappe 22, d. h. auch unmittelbar nach bzw. vor dem Öffnen bzw. Schließen, d. h. dem wechselseitigen Eingriff der jeweiligen ersten Flächenabschnitte 11, 12, 13, 14, 21, 22, 23, 24, ohne dass diese Flächenabschnitte in ihrer Dichtfunktion beeinträchtigt wären. Anders ausgedrückt, stellt die erfindungsgemäße Lösung in überraschender Weise einfacher und zufriedenstellender Weise sicher, dass Geräusche vermieden werden, in dem eine an der Abdichtung nicht beteiligte Fläche mit Strukturelementen versehen wird. Dieser Ansatz stellt auch dahingehend eine sehr innovative Lösung dar, da man bisher versucht hat, gerade die nicht mit der Dichtung involvierten Flächen möglichst Glatt zu gestalten.

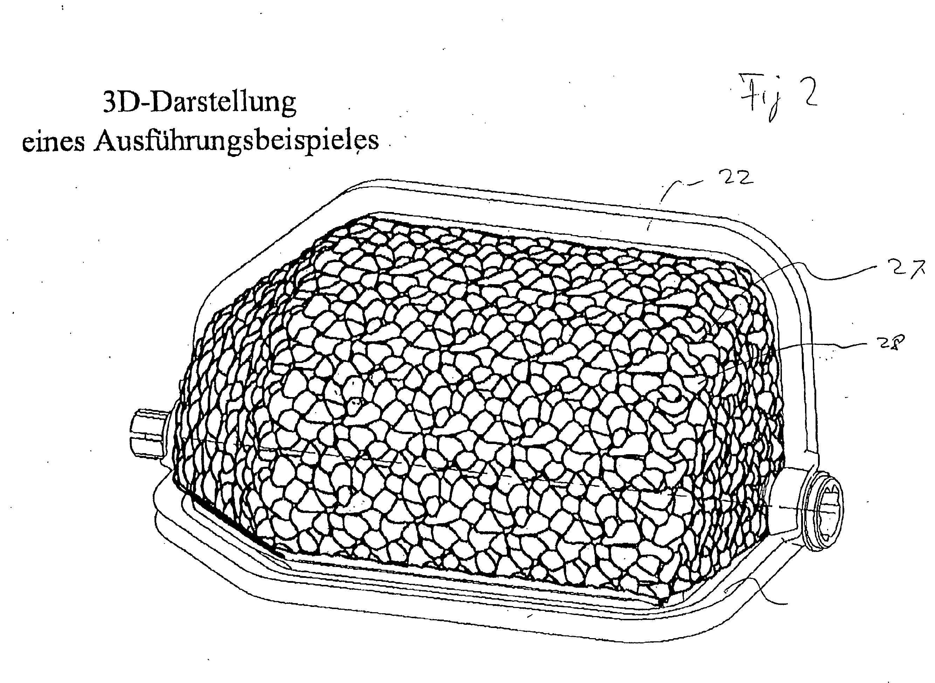

In Fig. 2 ist in dreidimensionaler Darstellung eine Luftklappe als Teil einer bevorzugten Ausführungsform dargestellt, wobei die gesamte Schalenfläche als gesamter Flächenabschnitt mit einer noppenartig unregelmäßigen Struktur bereitgestellt ist, die sich auch besonders einfach im Wege des spritzgusstechnischen Herstellungsverfahrens darstellen lässt. Wie deutlich zu erkennen ist, sind die ersten Flächenabschnitte 20, 23 ohne Unregelmäßigkeiten bereitgestellt, während die zweiten Flächenabschnitte 27 mit unregelmäßigen Vorkragungen 28 versehen sind, wobei in der hier dargestellten Ausführungsform die Oberflächenstrukturelemente 28 über eine bevorzugte Höhe von etwa 2 mm sowie über eine projizierte Fläche von etwa 0,5 cm² verfügt.

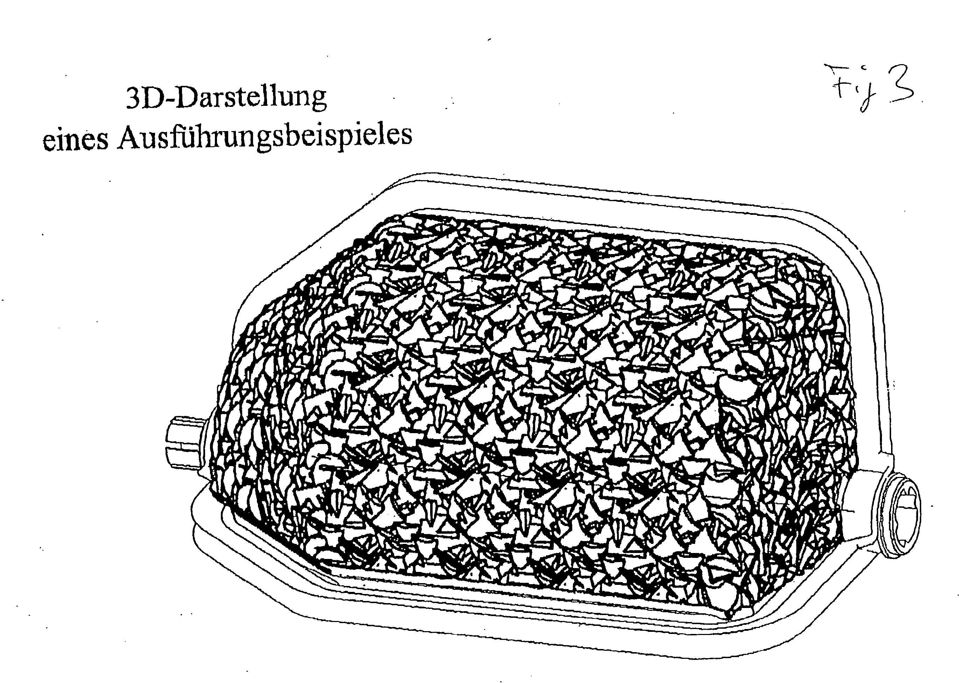

In Fig. 3 ist schließlich in einer Darstellung ähnlich zu Fig. 2 eine alternative Luftklappe dargestellt, bei der die Oberflächenstrukturelemente tetraederartig mit Spitzen oder Kanten bereitgestellt sind.

Obwohl die vorliegende Erfindung vorangehend vollständig unter Bezugnahme auf eine derzeit bevorzugte Ausführungsform beschrieben wurde, sollte der Fachmann erkennen, dass verschiedenste Veränderungen und Modifikationen im Rahmen der Ansprüche möglich sind; ohne von dem Grundgedanken der Erfindung abzuweichen. Im Gegensatz zu bisherigen Bestrebungen, die zweiten Flächenabschnitte möglichst ohne Strömungsstörstellen bereitzustellen und die ersten Flächenabschnitte unregelmäßig zu gestalten, erlaubt die vorliegende Erfindung es in besonders effektiver und kostengünstiger Weise die Strömungsgeräusche zu reduzieren ohne die Dichtheit zu beeinträchtigen, indem Oberflächenstrukturelemente an den zweiten Flächenabschnitten vorgesehen sind. Dies hat den zusätzlichen Vorteil, das bezüglich des Gestaltungsfreiraumes der Oberflächenstrukturelemente ein wesentlich höherer Freiheitsgrad besteht, als dies bei ersten Flächenabschnitten der Fall wäre, die ja an einer Wechselwirkung mit dem Luftdurchtritt beteiligt sind und somit zumindest eine Dichtung gewährleisten müssen.

## Patentansprüche

1. Luftstromsteuermittel einer Kraftfahrzeugsheiz-, -belüftungs- und/oder - klimaanlage mit einem Luftdurchtritt und mit einer in dem Luftdurchtritt angeordneten Luftklappe (20) mit jeweiligen ersten Flächenabschnitten (11, 12, 13, 14, 21, 22, 23, 24) zum wechselseitigen Eingriff und jeweiligen zweiten Flächenabschnitten (17, 26, 27), die nicht miteinander in Eingriff treten, **dadurch gekennzeichnet, dass** Oberflächenstrukturelemente (28) an dem zweiten Flächenabschnitt (27) zumindest auf der Lufteintrittsseite der Luftklappe (20) ausgebildet sind, und die ersten Flächenabschnitte (11, 12, 13, 14, 21, 22, 23, 24) keine Oberflächenstrukturelemente aufweisen.

2. Luftstromsteuermittel nach Anspruch 1, **dadurch gekennzeichnet, dass** die Oberflächenstrukturelemente (28) Vor- und/oder Rücksprünge umfassen, insbesondere bei einer Höhe/Tiefe von etwa 2mm.

3. Luftstromsteuermittel nach Anspruch 1 oder 2, **dadurch gekennzeichnet, dass** die Oberflächenstrukturelemente (28) zumindest flächenabschnittsweise unregelmäßig an geordnet sind.

4. Luftstromsteuermittel nach einem der vorangegangenen Ansprüche, **dadurch** gekenn zeichnet, dass die Oberflächenstrukturelemente (28) zumindest teilweise quaderförmig ausgebildet sind.

5. Luftskomsteuermittel nach einem der vorangegangenen Ansprüche, **dadurch gekennzeichnet, dass** die Oberflächenstrukturelemente (28) zumindest teilweise im wesentlichen polyederartig ausgebildet sind.

6. Luftstromsteuermittel nach einem der vorangegangenen Ansprüche, **dadurch gekennzeichnet, dass** die Oberflächenstrukturelemente (28) zumindest teilweise im wesentlichen halbsphärisch ausgebildet sind.

7. Luftstromsteuermittel nach einem der vorangegangenen Ansprüche, **dadurch gekennzeichnet, dass** die projizierte Fläche eines Oberflächenstrukturelementes (28) zwischen 0,1 und 1 cm², insbesondere etwa 0,5 cm² beträgt.

8. Luftstromsteuermittel nach einem der vorangegangenen Ansprüche, **dadurch gekennzeichnet, dass** die Luhklappe (20) eine Schalenklappe ist.

9. Luftstromsteuermittel nach einem der yorangegangenen Ansprüche, **dadurch gekennzeichnet, dass** sie eine Frischluf/Umluft-Steuerung ausbildet.

## Claims

1. Airflow control means of a motor vehicle heating, ventilation and/or air-conditioning system, with an air passage and with an air flap (20), which is arranged in the air passage, with respective first surface sections (11, 12, 13, 14, 21, 22, 23, 24) for mutual engagement and respective second surface sections (17, 26, 27) which do not come into engagement with one another, **characterized in that** surface structure elements (28) on the second surface section (27) are formed at least on the air inlet side of the air flap (20), and the first surface sections (11, 12, 13, 14, 21, 22, 23, 24) do not have any surface structure elements.

2. Airflow control means according to Claim 1, **characterized in that** the surface structure elements (28) comprise projections and/or recesses, in particular at a height/depth of approximately 2 mm.

3. Airflow control means according to Claim 1 or 2, **characterized in that** the surface structure elements (28) are arranged irregularly at least in some surface sections.

4. Airflow control means according to one of the preceding claims, **characterized in that** at least some of the surface structure elements (28) are of cuboidal design.

5. Airflow control means according to one of the preceding claims, **characterized in that** at least some of the surface structure elements (28) are of essentially polyhedron-like design.

6. Airflow control means according to one of the preceding claims, **characterized in that** at least some of the surface structure elements (28) are of essentially hemispherical design.

7. Airflow control means according to one of the preceding claims, **characterized in that** the projected surface of a surface structure element (28) is between 0.1 and 1 cm², in particular is approximately 0.5 cm².

8. Airflow control means according to one of the preceding claims, **characterized in that** the air flap (20) is a shell flap.

9. Airflow control means according to one of the preceding claims, **characterized in that** it forms a fresh air/circulating air control.

## Revendications

1. Moyen de commande d'un flux d'air d'une installation de chauffage, de ventilation et/ou de climatisation d'un véhicule automobile, comprenant un passage d'air et un volet d'air (20) disposé dans le passage d'air, avec des premières sections de surface respectives (11, 12, 13, 14, 21, 22, 23, 24) pour un engagement réciproque et des deuxièmes sections de surface respectives (17, 26, 27) qui n'entrent pas en prise les unes avec les autres, **caractérisé en ce que** des éléments de structure de surface (28) sont réalisés au niveau de la deuxième section de surface (27) au moins du côté d'entrée d'air du volet d'air (20), et les premières sections de surface (11, 12, 13, 14, 21, 22, 23, 24) ne présentent aucun élément de structure de surface.

2. Moyen de commande d'un flux d'air selon la revendication 1, **caractérisé en ce que** les éléments de structure de surface (28) comprennent des saillies et/ou des retraits, notamment à une hauteur/profondeur d'environ 2 mm.

3. Moyen de commande d'un flux d'air selon la revendication 1 ou 2, **caractérisé en ce que** les éléments de structure de surface (28) sont disposés de manière irrégulière au moins sur des sections de surface.

4. Moyen de commande d'un flux d'air selon l'une quelconque des revendications précédentes, **caractérisé en ce que** les éléments de structure de surface (28) sont réalisés au moins en partie sous forme parallélépipédique.

5. Moyen de commande d'un flux d'air selon l'une quelconque des revendications précédentes, **caractérisé en ce que** les éléments de structure de surface (28) sont réalisés au moins en partie essentiellement en forme de polyèdres.

6. Moyen de commande d'un flux d'air selon l'une quelconque des revendications précédentes, **caractérisé en ce que** les éléments de structure de surface (28) sont réalisés au moins en partie essentiellement sous forme hémisphérique.

7. Moyen de commande d'un flux d'air selon l'une quelconque des revendications précédentes, **caractérisé en ce que** la surface en projection d'un élément de structure de surface (28) mesure entre 0,1 et 1 cm², notamment environ 0,5 cm².

8. Moyen de commande d'un flux d'air selon l'une quelconque des revendications précédentes, **caractérisé en ce que** le volet d'air (20) est un volet à coquille.

9. Moyen de commande d'un flux d'air selon l'une quelconque des revendications précédentes, **caractérisé en ce qu'**il constitue une commande d'air frais/d'air de recirculation.
